# EUROPEAN PATENT APPLICATION

(11) **EP 2 093 045 A1**
(43) Date of publication of application: **26.08.2009**
(21) Application number: 07830367.4
(22) Date of filing: 23.10.2007
(51) Int. Cl.: B29D 30/30, B60C 9/20, B60C 9/22

(54) **METHOD OF PRODUCING PNEUMATIC TIRE**

(30) Priority: 30.11.2006 JP 2006323912
(71) Applicant: The Yokohama Rubber Co., Ltd., Minato-ku Tokyo 105-8685 (JP)
(72) Inventor: ISOBE, Satoru, Hiratsuka-shi Kanagawa 254-8601 (JP)
(74) Representative: HOFFMANN EITLE
(86) International application number: PCT/JP2007/070633
(87) International publication number: WO 2008/065832

(57) **Abstract**

Provided is a method of producing a pneumatic tire, which makes it possible to prevent, in forming a circumferential reinforcement layer by using a jointless material including one or more steel cords coated with rubber, occurrence of air pockets caused by variation in positions of wrapping of the jointless material. The method of producing a pneumatic tire includes forming a circumferential reinforcement layer in a way that while being oriented in the tire circumferential direction, a jointless material is wrapped helically in the tire axial direction around the outer peripheral side of a carcass layer in a tread portion, the jointless material including one or a plurality of steel cords coated with rubber. In the method, a lateral cross-sectional shape of the jointless material is formed substantially as a parallelogram, and a range of an inclination angle α of the parallelogram is set to 5° ≤ α ≤ 20°.

## Description

### TECHNICAL FIELD

The present invention relates to a method of producing a pneumatic tire, in which a circumferential reinforcement layer is formed by using a jointless material including one or a plurality of steel cords coated with rubber. More specifically, the present invention relates to a method of producing a pneumatic tire, which makes it possible to prevent occurrence of air pockets caused by variation in positions of wrapping of the jointless material.

### BACKGROUND ART

There has been proposed the following approach for enhancing durability of a belt portion mainly in a heavy-duty radial tire having an aspect ratio not more than 60%. In this approach, a circumferential reinforcement layer formed of a jointless material including one or a plurality of steel cords coated with rubber is added to the outer peripheral side of a carcass layer in a tread portion.

Conventionally, a lateral cross-sectional shape of such a jointless material as described above is round, square or rectangular in forming a circumferential reinforcement layer by, while orienting the jointless material in the tire circumferential direction, wrapping the jointless material helically in the tire axial direction. That is, the lateral cross-sectional shape is round or square in the case where the jointless material includes only one steel cord, and the lateral cross-sectional shape is rectangular in the case where the jointless material includes a plurality of steel cords. However, at the wrapping of the jointless material, if variation arises in positions of wrapping thereof, it causes an air pocket to occur inside the tire.

In consideration of such inconvenience, there has been proposed that: a jointless material is provided with a main portion having a cord buried therein, and a verge portion projecting from the main portion and being formed of coating rubber; and the verge portion is overlapped on the main portion when the jointless material is wrapped (refer to, for example, Patent Document 1). However, since stable molding of the jointless material provided with the main portion and the verge portion is difficult, or requires a high molding cost, use of such a jointless material as described therein is not necessarily the best strategy.
Patent Document 1: Japanese patent application *Kokai* publication No. Hei 8-132822

### DISCLOSURE OF THE INVENTION

### PROBLEMS TO BE SOLVED BY THE INVENTION

An object of the present invention is to provide a method of producing a pneumatic tire, which makes it possible to prevent, in forming a circumferential reinforcement layer by using a jointless material including one or a plurality of steel cords coated with rubber, occurrence of air pockets caused by variation in positions of wrapping of the jointless material.

### MEANS FOR SOLVING THE PROBLEMS

In order to achieve the above-described problems, a method of producing a pneumatic tire of the present invention is a method of producing a pneumatic tire, including forming a circumferential reinforcement layer in a way that while being oriented in the tire circumferential direction, a jointless material is wrapped helically in the tire axial direction around the outer peripheral side of a carcass layer in a tread portion, the jointless material including one or a plurality of steel cords coated with rubber. The method is characterized in that: a lateral cross-sectional shape of the jointless material is formed substantially as a parallelogram, and a range of an inclination angle α of the parallelogram is set to 5° ≤ α ≤ 20°.

### EFFECTS OF THE INVENTION

In the present invention, in forming a circumferential reinforcement layer by using a jointless material including one or a plurality of steel cords coated with rubber, a lateral cross-sectional shape of the jointless material is formed substantially as a parallelogram, and an inclination angle α of the parallelogram is specified, whereby, even when variation arises in positions of wrapping of the jointless material, occurrence of air pockets caused thereby can be prevented. Moreover, the jointless material whose lateral cross-sectional shape forms a parallelogram can be molded without difficulty through a mouthpiece having a parallelogram-shaped opening.

In the present invention, in a case where the outermost twist of the steel cords used in the circumferential reinforcement layer is an S-twist, the lateral cross-sectional shape of the jointless material is formed as a parallelogram sloping down to the left, and the jointless material is wrapped from right to left in the tire axial direction. In a case where the outermost twist of the cords used in the circumferential reinforcement layer is a Z-twist, the lateral cross-sectional shape of the jointless material is formed as a parallelogram sloping down to the right, and the jointless material is wrapped from left to right in the tire axial direction. That is, a direction of distortion occurring in the jointless material at the wrapping thereof differs by twist structure of a steel cord, and consequently, occurrence of air pockets can be more effectively prevented by appropriately setting the lateral cross-sectional shape of the jointless material, and a direction of the wrapping thereof, in accordance with the twist structure of the steel cord.

It is preferable that an outer diameter of each of the steel cords used in the circumferential reinforcement layer be 1.2 mm to 2.2 mm, and that the end count of the steel cords in the circumferential reinforcement layer be 17 cords/50 mm to 30 cords/50 mm. If ranges of the outer diameter of each of the steel cords used in the circumferential reinforcement layer, and the end count of the steel cords are set as the above, it is suitable particularly for a heavy-duty radial tire having an aspect ratio not more than 60 %. Additionally, it is preferable that a cord angle of the circumferential reinforcement layer be 0° to 5° with respect to the tire circumferential direction.

In a step of forming the circumferential reinforcement layer, it is preferable that the jointless material is molded by coating one or a plurality of steel cords with rubber by using a rubber coating machine provided with a mouthpiece having a parallelogram-shaped opening, and that the jointless material discharged from the opening of the mouthpiece of the rubber coating machine be supplied directly to a making drum. Thereby, the circumferential reinforcement layer can be formed with a shape of the jointless material, whose lateral cross-sectional shape forms a parallelogram, being favorably maintained.

### BRIEF DESCRIPTION OF THE DRAWINGS

[Fig. 1] Fig. 1 is a half cross-sectional view showing a main part of a heavy-duty pneumatic radial tire formed according to an embodiment of the present invention, the view being taken along a meridian of the tire.
[Fig. 2] Fig. 2 is a half cross-sectional view showing a main part of a heavy-duty pneumatic radial tire formed of another embodiment of the present invention, the view being taken along a meridian of the tire.
[Fig. 3] Fig. 3 is a cross-sectional view exemplifying a steel cord used in a circumferential reinforcement layer.
[Fig. 4] Fig. 4 is a cross-sectional view showing a jointless material including only one steel cord coated with rubber.
[Fig. 5] Fig. 5 is a cross-sectional view showing a jointless material including a plurality of steel cords coated with rubber.
[Fig. 6] Fig. 6 is an explanatory view showing a lateral cross-sectional shape of, and an observation direction of a direction of wrapping of, a jointless material.
[Fig. 7] Fig. 7 is a cross-sectional view showing behavior of a jointless material in a case where the outermost twist of a steel cord is an S-twist.
[Fig. 8] Fig. 8 is a cross-sectional view showing a direction of wrapping of a jointless material in a case where the outermost twist of a steel cord is an S-twist.
[Fig. 9] Fig. 9 is a cross-sectional view showing behavior of a jointless material in a case where the outermost twist of a steel cord is a Z-twist.
[Fig. 10] Fig. 10 is a cross-sectional view showing a direction of wrapping of a jointless material in a case where the outermost twist of a steel cord is a Z-twist.
[Fig. 11] Fig. 11 is a plan view showing a rubber coating machine used for molding a jointless material.
[Fig. 12] Fig. 12 is a front view showing a mouthpiece of the rubber coating machine of Fig. 11.

### DESCRIPTION OF REFERENCE NUMERALS

- 1: tread portion
- 2: carcass layer
- 3a to: 3d belt layers
- 4: circumferential reinforcement layer
- 40: jointless material
- C: steel cord

### BEST MODE FOR CARRYING OUT THE PRESENT INVENTION

Configurations of the present invention will be described in detail below with reference to the accompanying drawings.

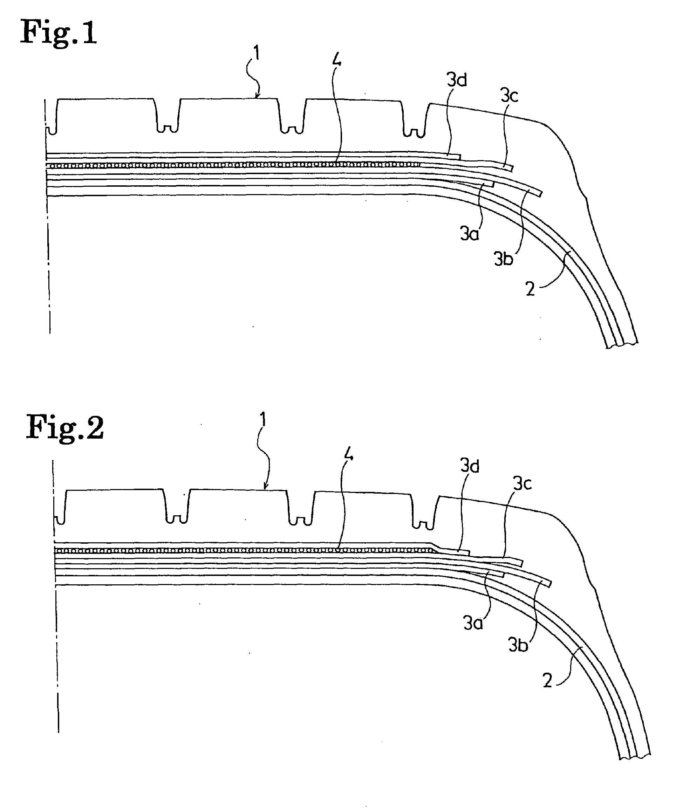

Fig. 1 is a view showing a main part of a heavy-duty pneumatic radial tire formed according to an embodiment of the present invention. As shown in Fig. 1, belt layers 3a to 3d including reinforcement cords are buried to the outer peripheral side of a carcass layer 2 in a tread portion 1. A cord angle of the belt layer 3a being the nearest to the carcass layer is 45° to 90° with respect to the tire circumferential direction, and a cord angle of each of the belt layers 3b to 3d is 5° to 30° with respect to the tire circumferential direction. Although the number of the belt layers is not particularly limited, a four-layer structure generally adopted in heavy-duty pneumatic radial tires is adopted here. The belt layer 3b being the second nearest to the carcass layer, and the belt layer 3c being the third nearest to the carcass layer, are in a relation where reinforcement cords of these layers intersect each other. A circumferential reinforcement layer 4 is disposed between these belt layers 3b and 3c being in such a mutually intersecting relation.

Incidentally, while being disposed to the outer peripheral side of the carcass layer 2, the circumferential reinforcement layer 4 may be disposed between the belt layers 3c and 3d, that is, to the outer peripheral side of the belt layers 3b and 3c being in the mutually intersecting relation, or, otherwise, may be disposed between the carcass layer 2 and the belt layer 3a, between the belt layers 3a and 3b, or to the outer peripheral side of the belt layer 3d used for protection.

The circumferential reinforcement layer 4 is formed by, while orienting a jointless material in the tire circumferential direction, wrapping the jointless material helically in the tire axial direction, the jointless material including one or a plurality of steel cords coated with rubber, and has a cord angle being, for example, 0° to 5° with respect to the tire circumferential direction. The circumferential reinforcement layer 4 is provided, particularly in a heavy-duty radial tire having an aspect ratio not more than 60 %, for the purpose of suppressing expansion of the tread portion 1 resulting from a high inner pressure. For this reason, it is favorable that an outer diameter of each steel cord used in the circumferential reinforcement layer 4 be 1.2 mm to 2.2 mm, and that the end count of the steel cords in the circumferential reinforcement layer be 17 cords/50 mm to 30 cords/50 mm. If the outer diameter of each of the steel cords is less than 1.2 mm, durability is deteriorated as a reinforcement effect becomes insufficient. In contrast, if the outer diameter of the steel cord exceeds 2.2 mm, a thickness of the circumferential reinforcement layer becomes excessive. Additionally, if the end count of the steel cords is less than 17 cords/50 mm, durability is deteriorated as a reinforcement effect becomes insufficient. In contrast, if the end count of the steel cords exceeds 30 cords/50 mm, a production cost of the pneumatic tire increases.

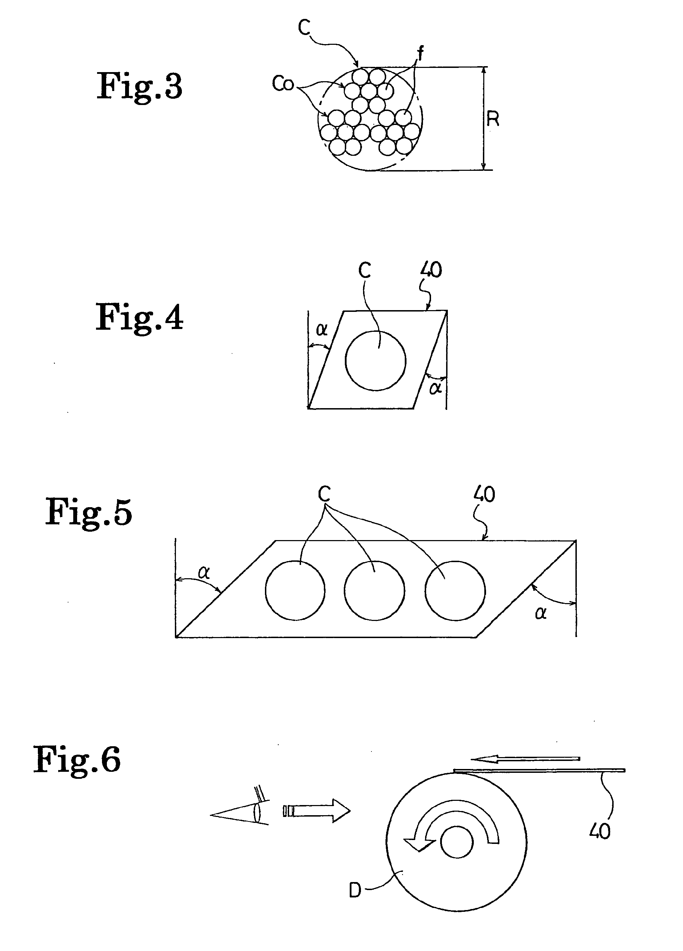

Fig. 3 is a view exemplifying a steel cord used in the circumferential reinforcement layer. In Fig. 3, the steel cord C has a twist structure obtained by additionally twisting together a plurality of first twisted cords C₀ each formed by twisting together a plurality of steel filaments f. An outer diameter R of the steel cord C is a diameter of a circumscribed circle thereof. Although one having the above twist structure is preferable as the steel cord C used in the circumferential reinforcement layer, another twist structure may be used alternatively.

Each of Figs. 4 and 5 is a view exemplifying the jointless material for forming the circumferential reinforcement layer.
Fig. 4 shows the jointless material 40 including only one steel cord C coated with rubber. On the other hand, Fig. 5 shows the jointless material 40 including a plurality of steel cords C coated with rubber. In both cases, a lateral cross-sectional shape of the jointless material 40 substantially forms a parallelogram, and a range of an inclination angle α of the parallelogram is set to 5° ≤ α ≤ 20°, or more preferably, to 5° ≤ α ≤ 15°. When a reference side disposed substantially parallel to the tire axial direction, and an inclined side inclined with respect to the reference side are supposed, the inclination angle α is an angle formed by a perpendicular of the reference side and the inclined side.

When the above described pneumatic radial tire is produced, in a process of producing a belt member formed of the belt layers 3a to 3d and the circumferential reinforcement layer 4, the circumferential reinforcement layer 4 is formed by, while orienting in the tire circumferential direction the jointless material 40 which includes one or a plurality of steel cords C coated with rubber, wrapping the jointless material 40 helically in the tire axial direction. Meanwhile, a primary green tire including the carcass layer 2 is molded. Then, after a secondary green tire is molded by, while expanding a diameter of the primary green tire, joining to a location corresponding to a tread portion of the primary green tire the belt member including the circumferential reinforcement layer 4, the secondary green tire is vulcanized.

In forming the circumferential reinforcement layer 4 by using the jointless material 40 including the one or plurality of steel cords C coated with rubber, a lateral cross-sectional shape of the jointless material 40 is formed substantially as a parallelogram, and a range of an inclination angle α of the parallelogram is specified as above, whereby, even when variation has arose in positions of wrapping of the jointless material 40, occurrence of air pockets caused thereby can be prevented. That is, even when a pitch between mutually adjacent portions of the jointless material 40 in the tire axial direction is too small or too large, side portions of the jointless material 40 which incline based on the inclination angle α are overlapped on each other, whereby formation of a large void between mutually adjacent portions of the jointless material 40, and formation of a large projected portion on the jointless material 40 can be avoided. Here, if the inclination angle α is less than 5°, an effect of preventing occurrence of air pockets becomes insufficient. In contrast, if it exceeds 20°, rubber peeling is more likely to occur in coating the steel cords C with rubber. Such rubber peeling becomes a factor deteriorating durability.

In the above method of producing a pneumatic tire, it is favorable that the lateral cross-sectional shape of, and a direction of wrapping of, the jointless material 40 be appropriately set in accordance with the outermost twist of the steel cord C used in the circumferential reinforcement layer 4. That is, in a case where the outermost twist (the twist in final twist process) of the steel cord C used in the circumferential reinforcement layer 4 is an S-twist, the lateral cross-sectional shape of the jointless material 40 is formed as a parallelogram sloping down to the left, and the jointless material 40 is wrapped from right to left in the tire axial direction. In contrast, in a case where the outermost twist of the steel cord C used in the circumferential reinforcement layer 4 is a Z-twist, the lateral cross-sectional shape of the jointless material 40 is formed as a parallelogram sloping down to the right, and the jointless material 40 is wrapped from left to right in the tire axial direction. Note that the lateral cross-sectional shape of, and the direction of wrapping of, the jointless material 40 are, as shown in Fig. 6, a shape and a direction observed when the jointless material 40 is viewed from the side facing a direction of movement of the jointless material 40 in wrapping the jointless material 40 around a making drum D.

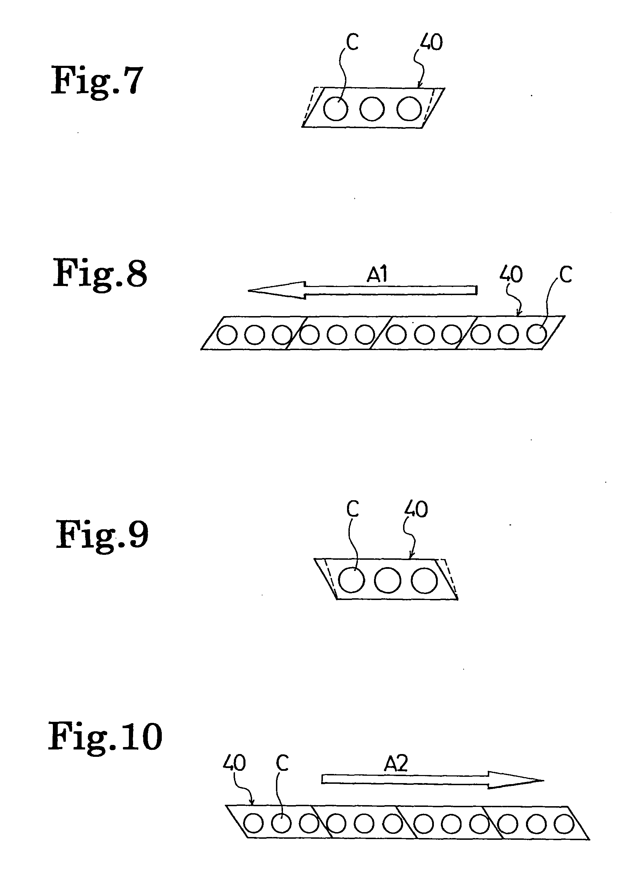

Fig. 7 is a view showing behavior of the jointless material in the case where the outermost twist of the steel cord is an S-twist, whereas Fig. 8 is a view showing the direction of wrapping of the jointless material in the case where the outermost twist of the steel cord is an S-twist. As shown in Fig. 7, when being subjected to a tensile force, the jointless material 40 including the S-twisted steel cord C undergoes torsional deformation, which forces the jointless material 40 to deform to the right from an original shape (illustrated by a broken line). For this reason, as shown in Fig. 8, the jointless material 40 showing the above behavior is formed as a parallelogram sloping down to the left, and the direction of wrapping of the jointless material 40 is set to a direction (from right to left in the tire axial direction) indicated by an arrow A1. Thereby, occurrence of air pockets around the jointless material 40 can be more effectively prevented.

Fig. 9 shows behavior of the jointless material in the case where the outermost twist of the steel cord is a Z-twist, whereas Fig. 10 shows the direction of wrapping of the jointless material in the case where the outermost twist of the steel cord is a Z-twist. As shown in Fig. 9, when being subjected to a tensile force, the jointless material 40 including the Z-twisted steel cord C undergoes torsional deformation, which forces the jointless material 40 to deform to the left from an original shape (illustrated by a broken line). For this reason, as shown in Fig. 10, the jointless material 40 showing the above behavior is formed as a parallelogram sloping down to the right, and the direction of wrapping of the jointless material 40 is set to a direction (from left to right in the tire axial direction) indicated by an arrow A2. Thereby, occurrence of air pockets around the jointless material 40 can be more effectively prevented.

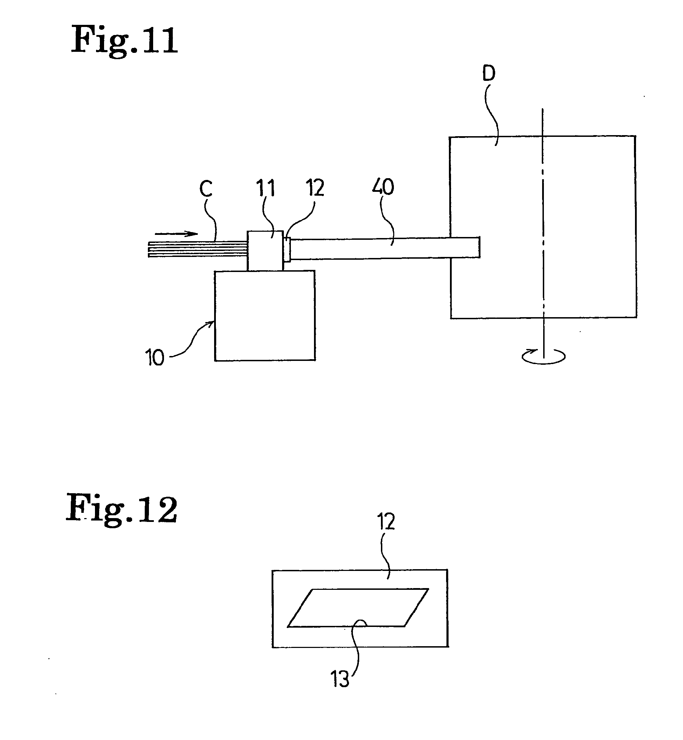

Fig. 11 is a plan view showing a rubber coating machine used for molding a jointless material, and Fig. 12 is a front view showing a mouthpiece thereof. In Fig. 11, the rubber coating machine 10 is provided with an extrusion head 11 and the mouthpiece 12 attached to the extrusion head 11. The mouthpiece 12 has, as shown in Fig. 12, an opening 13 forming a parallelogram. With this rubber coating machine 10, when the one or plurality of steel cords C pass through the inside of the extrusion head 11, the periphery of the steel cords C is coated with rubber, whereby the jointless material 40 whose lateral cross-sectional shape substantially forms a parallelogram is discharged from the mouthpiece 12.

In the above described method of producing a pneumatic tire, it is desirable in a process of forming the circumferential reinforcement layer 4 that, after the jointless material 40 whose lateral cross-sectional shape substantially forms a parallelogram is molded by coating the one or plurality of steel cords C with rubber by using the rubber coating machine 10 provided with the mouthpiece 12 having the parallelogram-shaped opening 13, the jointless material 40 discharged from the mouthpiece 12 of the rubber coating machine be provided directly to the making drum D without being reeled. Thereby, the circumferential reinforcement layer 4 can be formed with a lateral cross-sectional shape of the jointless material 40 being favorably maintained, the lateral cross-sectional shape being determined by the opening 13 of the mouthpiece 12.

The above described method of producing a pneumatic tire can be applied to production of various kinds of tires each provided with a circumferential reinforcement layer, but is suitable particularly for a case of producing a heavy-duty radial tire having an aspect ratio not more than 60 %.

Although the preferred embodiments of the present invention have been described above in detail, it should be understood that various alterations, substitutions and replacements can be made thereto insofar as they do not depart from the spirit and scope of the present invention defined by the scope of appended claims.

### EXAMPLES

Pneumatic tires having a tire size of 435/45R22.5 were produced each by forming a circumferential reinforcement layer by, while orienting a jointless material in the tire circumferential direction, wrapping the jointless material helically in the tire axial direction around the outer peripheral side of a carcass layer in a tread portion, the jointless material including a plurality of steel cords coated with rubber. In producing these pneumatic tires, lateral cross-sectional shapes of the jointless materials were formed substantially as parallelograms, and inclination angles α of the parallelograms were made variously different (Examples 1 and 2, Conventional Example 1, and Comparative Examples 1 and 2). However, common conditions were applied to: directions of outermost twists of steel cords used in the circumferential reinforcement layers; directions of the wrapping; diameters thereof; and the end count of the embedded cords.

With respect to these Examples 1 and 2, Conventional Example 1, and Comparative Examples 1 and 2, rubber peeling rates and air pocket defective rates were evaluated by the following methods, and results thereof are shown in Table 1.

Rubber peeling rates:
Each of the jointless materials, which included the plurality of steel cords, was checked by a sensor in a supplying process thereof, and a rate (in %) of a length of exposed parts of the steel cords to an entire length of the jointless material was found.

Air pocket defective rates:
The finished tires were tested through shearography. That is, expansions resulting from air pockets were visually recognized with the finished tires being disposed under vacuum, and rates (in %) of tires in which air pocket defectives occurred were obtained.

**[Table 1]**

| | Example 1 | Example 2 | Comparative Example 1 | Conventional Example 1 | Comparative Example 2 |
|---|---|---|---|---|---|
| Outermost twist direction | S | S | S | S | S |
| Direction of wrapping | From right to left | From right to left | From right to left | From right to left | From right to left |
| Inclination angle α (°) | 5 | 20 | 25 | 0 | 45 |
| Cord outer diameter (mm) | 1.95 | 1.95 | 1.95 | 1.95 | 1.95 |
| End count of cords (cords/50 mm) | 22 | 22 | 22 | 22 | 22 |
| Rubber peeling rate (%) | 0 | 0 | 10 | 0 | 25 |
| Air pocket defective rate (%) | 0 | 0 | 2 | 3.5 | 2 |

As is apparent from this Table 1, favorable results were obtained in rubber peeling rate and in air pocket defective rate with respect to Examples 1 and 2. On the other hand, favorable results were not obtained in rubber peeling rate or in air pocket defective rate with respect to Conventional Example 1 and Comparative Examples 1 and 2.

Next, pneumatic tires having a tire size of 435/45R22.5 were produced each by forming a circumferential reinforcement layer by, while orienting a jointless material in the tire circumferential direction, wrapping the jointless material helically in the tire axial direction around the outer peripheral side of a carcass layer in a tread portion, the jointless material including a plurality of steel cords coated with rubber. In producing these pneumatic tires, lateral cross-sectional shapes of the jointless materials were formed substantially as parallelograms, inclination angles α of the parallelograms were set to 10°, and directions of the outermost twists of steel cords and directions of the wrapping were made variously different (Examples 3 to 6). However, common conditions were applied to diameters of and the end count of the steel cords used in the circumferential reinforcement layer.

With respect to these Examples 3 to 6, rubber peeling rates and air pocket defective rates were evaluated by the above methods, and results thereof are shown in Table 2.

**[Table 2]**

| | Example 3 | Example 4 | Example 5 | Example 6 |
|---|---|---|---|---|
| Outermost twist direction | S | Z | S | Z |
| Direction of wrapping | From right to left | From right to left | From right to left | From right to left |
| Inclination angle α (°) | 10 | 10 | 10 | 10 |
| Cord outer diameter (mm) | 1.95 | 1.95 | 1.95 | 1.95 |
| End count of cords (cords/50 mm) | 22 | 22 | 22 | 22 |
| Rubber peeling rate (%) | 0 | 0 | 0 | 0 |
| Air pocket defective rate (%) | 0 | 0 | 1 | 1 |

From this Table 2, it can be found that an effect of reducing the air pocket defective rate is increased if: the jointless material is wrapped from right to left in the tire axial direction in the case where the outermost twist of the steel cords used in the circumferential reinforcement layer is S-twist; and the jointless material is wrapped from left to right in the tire axial direction in the case where the outermost twist of the steel cords used in the circumferential reinforcement layer is Z-twist.

Next, pneumatic tires having a tire size of 435/45R22.5 were produced each by forming a circumferential reinforcement layer by, while orienting a jointless material in the tire circumferential direction, wrapping the jointless material helically in the tire axial direction around the outer peripheral side of a carcass layer in a tread portion, the jointless material including a plurality of steel cords coated with rubber. In producing these pneumatic tires, lateral cross-sectional shapes of the jointless materials were formed substantially as parallelograms, inclination angles α of the parallelograms were set to 10°, and diameters of and the end count of steel cords and were made variously different (Examples 7 to 9). However, common conditions were applied to: directions of the outermost twists of the steel cords used in the circumferential reinforcement layers; and directions of the wrapping.

With respect to these Examples 7 to 9, rubber peeling rates and air pocket defective rates were evaluated by the above methods, and results thereof are shown in Table 3.

Additionally, with respect to Examples 7 to 9 and aforementioned Example 3, durability, weights, and production costs were evaluated by the following methods, and results thereof are shown together in Table 3.

Durability:
Each of the test tires was assembled to a rim having a rim size of 22.5 x 14.00, inflated to an air pressure of 900 kPa, and mounted on a drum testing machine. A running test thereof was conducted with a speed of 45 km/h under a load of 68.65 kN, and a mileage until the tire was destroyed was measured. Results of the evaluation are represented by index numbers where the result on Example 3 is set to 100. A higher value of this index number means that durability is more excellent.

Weights:
Weights of the respective test tires were measured. Results of the evaluation are represented by index numbers where the result on Example 3 is set to 100. A lower value of this index number means that the weight is lighter.

Production costs:
Production costs of the respective test tires were obtained. Results of the evaluation are represented by index numbers where the result on Example 3 is set to 100. A lower value of this index number means that the production cost is lower.

**[Table 3]**

| | Example 3 | Example 7 | Example 8 | Example 9 |
|---|---|---|---|---|
| Outermost twist direction | S | S | S | S |
| Direction of wrapping | From right to left | From right to left | From right to left | From right to left |
| Inclination angle α (°) | 10 | 10 | 10 | 10 |
| Cord outer diameter (mm) | 1.95 | 1.95 | 1.00 | 1.00 |
| End count of cords (cords/50 mm) | 22 | 15 | 30 | 40 |
| Rubber peeling rate (%) | 0 | 0 | 0 | 0 |
| Air pocket defective rate (%) | 0 | 0 | 0 | 0 |
| Durability (index number) | 100' | 90 | 92 | 98 |
| Weight (index number) | 100 | 98 | 98 | 100 |
| Production cost (index number) | 100 | 98 | 105 | 110 |

From this Table 3, it can be found that: durability is deteriorated if the end count of steel cords used in the circumferential reinforcement layer is less than the determined range; durability is deteriorated if a diameter of each steel cord used in the circumferential reinforcement layer is less than the determined range; and the production cost is higher if the end count of the steel cords used in the circumferential reinforcement layer exceeds the determined range.

## Claims

1. A method of producing a pneumatic tire, comprising forming a circumferential reinforcement layer in a way that while being oriented in the tire circumferential direction, a jointless material is wrapped helically in the tire axial direction around the outer peripheral side of a carcass layer in a tread portion, the jointless material including one or a plurality of steel cords coated with rubber,
the method **characterized in that**
a lateral cross-sectional shape of the jointless material is formed substantially as a parallelogram, and
a range of an inclination angle α of the parallelogram is set to 5° ≤ α ≤ 20°.

2. The method of producing a pneumatic tire according to claim 1, **characterized in that:**
in a case where the outermost twist of the steel cords used in the circumferential reinforcement layer is an S-twist, the lateral cross-sectional shape of the jointless material is formed as a parallelogram sloping down to the left, and the jointless material is wrapped from right to left in the tire axial direction; and
in a case where the outermost twist of the steel cords used in the circumferential reinforcement layer is a Z-twist, the lateral cross-sectional shape of the jointless material is formed as a parallelogram sloping down to the right, and the jointless material is wrapped from left to right in the tire axial direction.

3. The method of producing a pneumatic tire according to any one of claims 1 and 2, **characterized in that** an outer diameter of each of the steel cords used in the circumferential reinforcement layer is 1.2 mm to 2.2 mm, and that the end count of the steel cords in the circumferential reinforcement layer is 17 cords/50 mm to 30 cords/50 mm.

4. The method of producing a pneumatic tire according to any one of claims 1 to 3, **characterized in that** a cord angle of the circumferential reinforcement layer is 0° to 5° with respect to the tire circumferential direction.

5. The method of producing a pneumatic tire according to any one of claims 1 to 4, **characterized in that,** in the step of forming the circumferential reinforcement layer, after the jointless material is molded by coating the one or plurality of steel cords with rubber by using a rubber coating machine provided with a mouthpiece having a parallelogram-shaped opening, the jointless material discharged from the mouthpiece of the rubber coating machine is supplied directly to a making drum.
